Europäisches Patentamt

European Patent Office

Office européen des brevets

(11) Veröffentlichungsnummer: **0 236 779 B1**

(12) **EUROPÄISCHE PATENTSCHRIFT**

(45) Veröffentlichungstag der Patentschrift: 20.03.91

(51) Int. Cl.⁵: **H04Q 11/04, H04Q 3/545**

(21) Anmeldenummer: 87102074.9

(22) Anmeldetag: 13.02.87

(54) Schaltungsanordnung für zentralgesteuerte Zeitmultiplex-Fernmeldevermittlungsanlagen, insbesondere PCM-Fernsprechvermittlungsanlagen mit an ein Koppelfeld angeschlossenen Anschlussgruppen.

(30) Priorität: 10.03.86 DE 3607903
27.03.86 DE 3610572

(43) Veröffentlichungstag der Anmeldung:
16.09.87 Patentblatt 87/38

(45) Bekanntmachung des Hinweises auf die Patenterteilung:
20.03.91 Patentblatt 91/12

(84) Benannte Vertragsstaaten:
AT BE CH DE FR GB IT LI NL SE

(56) Entgegenhaltungen:
EP-A- 0 070 502
EP-A- 0 076 629
EP-A- 0 125 602

NATIONAL TELECOMMUNICATIONS CONFE-
RENCE, 29. November - 3. Dezember 1981,
New Orleans, Band 2-4, Heft D5-4, Seiten 1-5,
IEEE, NEw York, US; JACKSON et al.: "GTD-5
EAX RSU Survivability"

Idem

(73) Patentinhaber: Siemens Aktiengesellschaft
Wittelsbacherplatz 2
W-8000 München 2(DE)

(72) Erfinder: Schaich, Gerhard, Ing. (grad.)
Theresienhoehe 6c
W-8000 Muenchen 2(DE)
Erfinder: Schönauer, Ludwig, Dr.rer.nat.
Dipl.-Phys.
Ringbergstrasse 33
W-8029 Sauerlach(DE)

PROCEEDINGS OF THE FIRST ANNUAL PHOENIX CONFERENCE ON COMPUTERS AND COMMUNICATIONS, 9.-12. Mai 1982, Phoenix, Seiten 263-266, IEEE, New York, US; D.P. BITNER: "Inter-Processor communication in a distributed processing system GTD-5EAX"

INTERNATIONAL SWITCHING SYMPOSIUM, 21.-25. September 1981, Montreal, "Session" 13A, Heft 2, Seiten 1-7; D. JACKSON et al.: "Impacts of multiprocessing on GTD-5EAX call processing and operating system software"

INTERNATIONAL SWITCHING SYMPOSIUM, 21.-25. September 1981, Montreal, "Session" 34A, Heft 4, Seiten 1-6; R.H. BOURGONJON et al.: "The TCP16, a fault-tolerant control system for PRX/D"

INTERNATIONAL SWITCHNING SYMPOSIUM, 21.-25. September 1981, Montreal, "Session" 23c, Heft 2, Seiten 1-7; W. STROBELT: "Digital switching in private networks"

**Beschreibung**

Die Erfindung bezieht sich auf eine Schaltungsanordnung gemäß dem Oberbegriff des Anspruchs 1.

Eine Schaltungsanordnung dieser Art ist im EP-A-0125602 offenbart.

Fernsprechvermittlungsanlagen dieser Art sind bereits durch die Zeitschrift "telcom report", vierter Jahrgang (1981), Beiheft "Digitalvermittlungssystem EWSD" bekannt, insbesondere durch den auf Seite 19 beginnenden Artikel.-Zeitmultiplex-Verbindungsleitungen fassen immer eine größere Anzahl von zum Beispiel vierundzwanzig, dreißig, sechzig oder noch mehr Kanalpaaren zusammen. Ein Kanalpaar umfaßt immer einen Kanal in der einen Übertragungsrichtung und einen Kanal in der anderen Übertragungsrichtung. Ein Kanalpaar ist pro Verbindung erforderlich (abgesehen von sogenannten Mehrkanalverbindungen). Wie die Darstellung in der genannten Zeitschrift zeigt, ist eine größere Anzahl von Anschlußgruppen pro Fernsprechvermittlungsstelle mit einem sicherheitshalber gedoppelten Koppelfeld vorgesehen. Jede Anschlußgruppe umfaßt eine Mehrzahl von Anschlußeinheiten. Es gibt Anschlußeinheiten verschiedener Art je nach der speziellen Art der angeschlossenen Leitungen. Teilnehmerleitungen sind in der Regel Analog-Leitungen, können aber auch in PCM-Technik realisiert sein. Verbindungsleitungen können ebenfalls Analog-Leitungen sein. Sie können aber auch als PCM-Kanäle realisiert sein, die in bekannter Weise in PCM-Übertragungssystemen mit jeweils einer Zeitmultiplex-Leitung zusammengefaßt sind. Die genannten Anschlußeinheiten sind unterschiedlich aufgebaut, und zwar jeweils entsprechend der betreffenden Technik der anzuschließenden Teilnehmer-und Verbindungsleitungen, und je nachdem, ob hierbei Analog-Technik oder Zeitmultiplex-Technik realisiert ist. In der Regel wird eine Anschlußeinrichtung für eine Mehrzahl von zum Beispiel acht Analog-Teilnehmerleitungen vorgesehen. Ebenso wird eine Anschlußeinheit für eine Mehrzahl von Analog-Verbindungsleitungen vorgesehen. Pro Zeitmultiplex-Verbindungsleitung eines PCM-Übertragungssystems wird in der Regel eine eigene Anschlußeinrichtung vorgesehen. Ebenso gut wäre es aber auch möglich, an eine einzige Anschlußeinrichtung mehr als eine Zeitmultiplex-Verbindungsleitung eines PCM-Übertragungssystems anzuschließen, zum Beispiel zwei Zeitmultiplex-Leitungen.

Durch naturgemäße Zusammenfassung einer weiter oben beispielsweise angegebenen Anzahl von Kanälen jeweils in einem einzigen PCM-Übertragungssystem ist deren Zuordnung selbstverständlich auch nur zu einer einzigen Verkehrsrichtung bedingt, denn die betreffenden Kanäle müssen ja den gleichen Verlauf nehmen wie die Zeitmultiplex-Leitung dieses PCM-Übertragungssystems. Da ebenso aufgrund dieser Zusammenfassung der Anschluß einer Zeitmultiplex-Leitung eines PCM-Übertragungssystems an eine Anschlußeinheit auch eine Zuordnung der betreffenden Kanäle zu einer einzigen Anschlußeinheit und damit zu einer einzigen Anschlußgruppe bedingt ist, ergibt sich für den Fall, daß für eine Verkehrsrichtung nur die Kanäle (Kanalpaare) eines einzigen PCM-Übertragungssystems bereitgestellt sind, daß bei einem Ausfall einer Anschlußgruppe sämtliche Verbindungsmöglichkeiten in der betreffenden Verkehrsrichtung ausfallen, also in vermittlungstechnischer Hinsicht ein ganzes Richtungsbündel.

Um den zuvor erläuterten Effekt des Totalausfalles eines Richtungsbündels lediglich aufgrund des Ausfalles einer Anschlußgruppe zu vermeiden, ist bisher in derartigen Fällen vorgesehen worden, zwei voneinander unabhängige PCM-Übertragungssysteme pro Verkehrsrichtung vorzusehen, und die Zeitmultiplex-Leitungen dieser Übertragungssysteme an Anschlußeinheiten zweier verschiedener Anschlußgruppen anzuschalten. Dies ist besonders bei kleinen Richtungsbündeln wegen der Doppelung der PCM-Übertragungssysteme aufwendig und unwirtschaftlich.

Für die Erfindung besteht die Aufgabe, in einer Schaltungsanordnung der eingangs angegebenen Art im Hinblick auf die Möglichkeit eines Ausfalles einer Anschlußgruppe Vorkehrungen zu treffen, die eine Doppelung eines PCM-Übertragungssystems pro Verkehrsrichtung nicht erforderlich machen und dabei vermeiden, daß alleine aufgrund des Ausfalles einer Anschlußgruppe eine ganze Verkehrsrichtung, das heißt der Kanalpaare des betreffenden PCM-Übertragungssystems, ausfallen kann bzw. muß. Die Erfindung löst die gestellte Aufgabe durch die Merkmale des Kennzeichnenden Teils von Anspruch 1.

Die Erfindung schafft die Möglichkeit, daß ein PCM-Übertragungssystem mit seinen Kanälen bei Ausfall der betreffenden Anschlußgruppe weiter betrieben werden kann. In diesem Falle wird also eine doppelte Anzahl von Kanälen (Kanalpaaren) über eine Anschlußgruppe, d.h. über die jeweils andere der beiden einander paarweise zugeordneten Anschlußgruppen vermittelt. Dies führt zwar zu einer besonders großen verkehrsmäßigen Belastung der betreffenden Anschlußgruppe und zu einer Mehrung von Gassenbesetztfällen, jedoch haben sämtliche über die betreffenden Kanäle im Aufbau befindlichen Verbindungen die gleiche Erfolgs-Chance. Dabei kann es sich ergeben, daß eine Mehrzahl von Verkehrsrichtungen nur noch mit der halben Verkehrsleistung betrieben werden kann. Jedoch können Verbindungen noch in sämtliche Verkehrsrichtungen überhaupt noch hergestellt werden und es wird der Totalausfall der primär betroffenen Verkehrsrichtung bzw. Verkehrsrichtungen vermieden.

Gemäß einer Weiterbildung der Erfindung ist vorgesehen, daß die Anschlußeinheiten von dem zentralen Prozessor mittels jeweils einer Normalbetriebsadresse und jeweils einer Notbetriebsadresse ansteuerbar sind, und daß bei Eintritt einer Betriebsstörung in einer Anschlußgruppe bzw. deren Gruppensteuereinrichtung die beim Normalbetrieb derselben im zentralen Prozessor gesperrten Notbetriebsadressen der betreffenden Anschlußeinheiten entsperrt und stattdessen die Normalbetriebsadressen gesperrt werden. Dadurch wird die Ansteuerung der Anschlußeinheit in der Notbetriebssituation sehr einfach gestaltet.

Gemäß einer anderen Weiterbildung der Erfindung, die bei einer Umschaltung vom Normalbetrieb auf Notbetrieb (und umgekehrt) eine gleichbleibende Ansteuerprozedur ermöglicht, ist vorgesehen, daß die Anschlußeinheiten von dem zentralen Prozessor über den Anschlußgruppen zugeordnete Signalkanäle mittels jeweils einer Adresse ansteuerbar sind, die einen die jeweilige Anschlußgruppe bezeichnenden ersten Adressenteil und einen die jeweilige Anschlußeinheit innerhalb jener bezeichnenden zweiten Adressenteil umfaßt, daß ein Adressen-Signalkanal-Umsetzer im zentralen Prozessor bei Vorliegen einer Information für eine Anschlußeinheit aus der der Information beigefügten Adresse anhand deren erstem Adressenteil eine von dem Prozessor zur Ansteuerung des betreffenden Signalkanals verwendete Signalkanalnummer abgibt, daß nach dessen Ansteuerung die Adresse sowie die Information über denselben übertragen wird, und daß bei Eintritt einer der genannten Betriebsstörungen der Prozessor die Adresse der betreffenden Anschlußgruppe im Adressen Signalkanal-Umsetzer gegen die der anderen auswechselt, und umgekehrt bei Aufhebung der betreffenden Betriebsstörung.

Dies schafft die Möglichkeit, daß bei Eintritt einer Betriebsstörung in einer Anschlußgruppe die Ansteuerung der Anschlußeinheit in der Notbetriebssituation sehr einfach gestaltet wird.

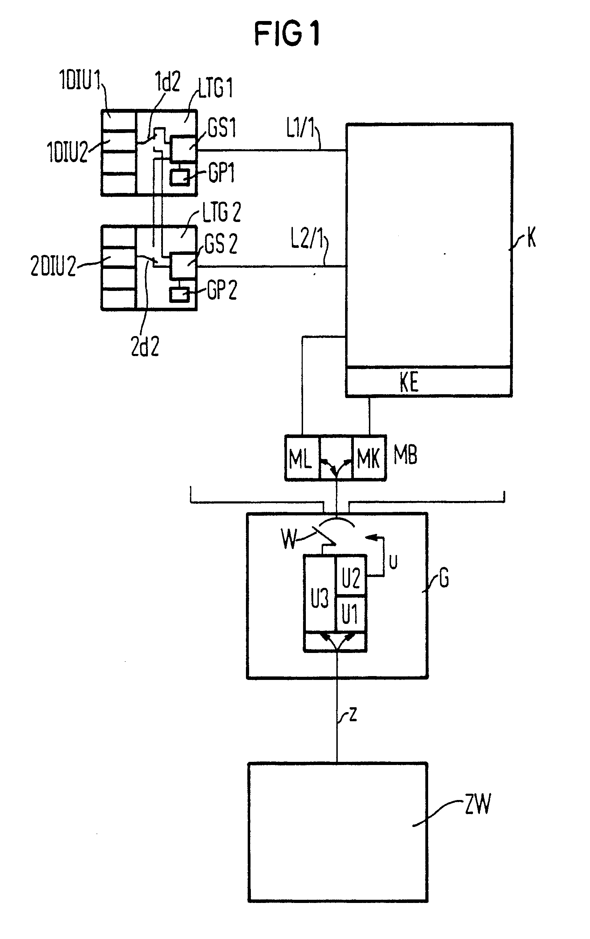

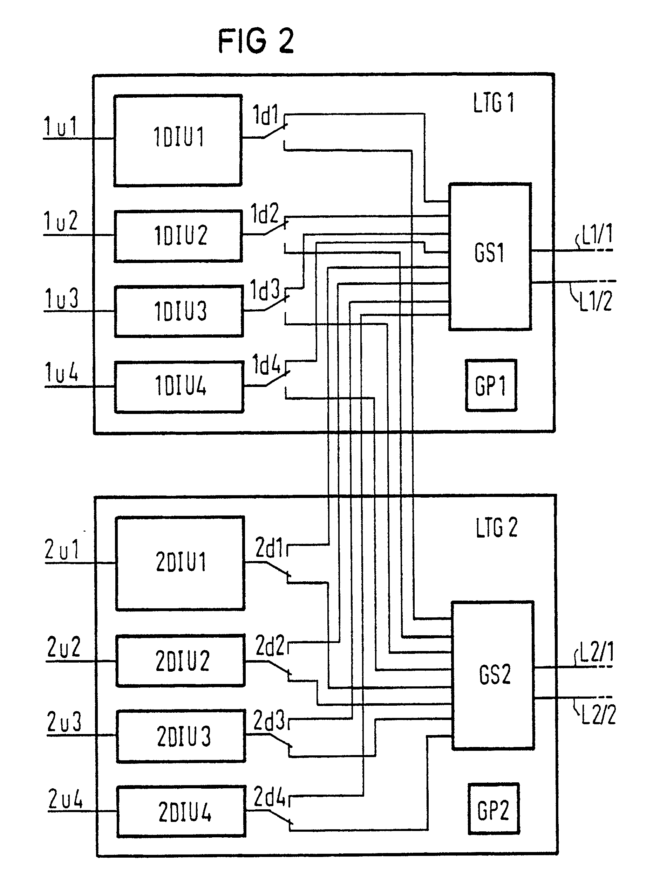

In den Zeichnungen FIG 1 und 2 ist ein Ausführungsbeispiel der Erfindung nur in wesentlich zu ihrem Verständnis beitragenden Bestandteilen dargetellt, worauf dieselbe jedoch keineswegs beschränkt ist. Dabei zeigt FIG 1 auszugsweise eine Fernsprechvermittlungsanlage der Art, wie sie auch in der DE-C 3 128 365 beschrieben ist. FIG 2 zeigt weitere erfindungswesentliche Details.

Die Beschreibung des Ausführungsbeispieles geht von bekannten Zeitmultiplex-Fernsprechvermittlungsanlagen mit PCM-Technik aus, wie sie in der Fachliteratur vielfältig und detailliert beschrieben sind, beispielsweise in der weiter oben genannten Zeitschrift "telecom report". Hierin sind unter anderem auf Seite 19 ff periphere Anschlußgruppen in diesem Fernsprechvermittlungssystem beschrieben. In der Figur 2 sind zwei Anschlußgruppen LTG1 und LTG2 auszugsweise dargestellt, die zu einer zentralgesteuerten Zeitmultiplex-Fernsprechvermittlungsanlage in PCM-Technik gemäß Fig. 1 gehören. Sie sind in an sich bekannter Weise über Zeitmultiplex-Leitungen L1 und L2 an ein nicht gezeigtes mehrstufiges, Zeitmultiplex-Eingänge und Zeitmultiplex-Ausgänge aufweisendes zentrales und gedoppeltes Koppelfeld K gemäß Fig. 1 angeschlossen. Dabei ist jeder dieser Anschlüsse entsprechend dieser Dopplung des Koppelfeldes ein zweifacher. Jede dieser beiden pro Anschlußgruppe, z. B. LTG1, vorgesehenen Zeitmultiplex-Leitungen ist also jeweils - wie in der zuvor genannten Patentschrift im Detail dargestellt und beschrieben - an einen Zeitmutiplex-Eingang und einen Zeitmultiplex-Ausgang dieses Koppelfeldes angeschlossen.

Ferner ist gemäß Fig.1 ein zentraler Prozessor ZW vorgesehen, mit dessen Hilfe die gesamten Steuerungsvorgänge für die Verbindungsherstellung über das zentrale Koppelfeld K in an sich bekannter Weise mittels Puffereinrichtung MB/MK und Koppelfeldeinstelleinrichtung KE bewerkstelligt werden, was im einzelnen in dem genannten Patent beschrieben ist. Hierzu werden Informationen durch den zentralen Prozessor ZW (zentrales Steuerwerk) von den Anschlußgruppen, z. B. LTG1 und weiteren, hereingeholt sowie in umgekehrter Richtung zu ihnen hin abgegeben. Hierbei wirken dezentrale Steuereinrichtungen GP1, GP2 und weitere ihresgleichen in den Anschlußgruppen in bekannter Weise mit. Für diesen Informationsaustausch werden die Anschlußgruppen und die Anschlußeinheiten in ihnen adressiert angesteuert.

Den vom zentralen Prozessor ZW an diese zu übertragenden Informationen, die auch Abrufbefehle zum Abruf von den Anschlußgruppen bzw. von den Anschlußeinheiten zum zentralen Steuerwerk zu übertragenden Informationen, z. B. Wahlinformationen, sein können, ist jeweils eine die betreffende Anschlußeinheit bezeichnende Adresse vorangestellt. Ist nun eine Anschlußeinheit vom zentralen Prozessor ZW anzusteuern zwecks Übertragung einer Information (ggfs. Abrufbehl) von diesem an jene, so überträgt dasselbe die Adresse und die Information sukzessive nacheinander zunächst zu einer Eingabe-Ausgabe-Einrichtung G (in "telcom report": IOP). Diese nimmt beide zunächst auf und speichert sie.

Wie in der zuvor genannten Patentschrift erläutert ist, bestehen zwischen der Eingabe-Ausgabe-Einrichtung G einerseits und jeder der Anschlußgruppen, und zwar ihren dezentralen Steuereinrichtungen, z.B. GP1, GP2, andererseits über die Zeitmultiplex-Leitungen L1/2 bzw. L2/2, und zwar über jeweils einen Kanal pro Zeitmultiplexleitung, sowie über das Koppelfeld K und über Puffereinrichtungen MB/ML Datenverbindungen. Hat nun die Eingabe-Ausgabeeinrichtung eine Informatiohn nebst Adresse vom zentralen Steuerwerk ZW über den Weg z empfangen, so führt sie von dieser Adresse einen ersten Adressenteil u. a. einem Adressen-Signalkanal-Umsetzer U1/U2 zu. Dieser erste Adressenteil entspricht der jeweiligen Anschlußgruppe und damit der ihr zugeordneten Datenverbindung über Puffereinrichtung MB und Koppelfeld K. Der genannte Umsetzer U1/U2 gibt eine dem ersten Adressenteil entsprechende Steuerinformation a, die er über den Steuerweg und einem elektronischen Wähler W zuführt, welcher dadurch auf den betreffenden Signalkanal (über MB verlaufend) eingestellt wird. Dadurch ist die Eingabe-Ausgabe-Einrichtung G über diesen mit der dezentralen Steuereinrichtung , z. B. GP1, der betreffenden Anschlußgruppe, z. B. LTG1, verbunden und überträgt nun zu dieser die Information nebst vollständiger Adresse, d. h. einschließlich erstem Adressenteil.

Es ist eine größere Anzahl von einem Anschluß von verschiedenen Verkehrsrichtungen zugeordneten Zeitmultiplex-Verbindungsleitungen dienenden Anschlußgruppen vorgesehen, von denen die beiden Anschlußgruppen LTG1 und LTG2 auszugsweise dargestellt sind. Bedeutung, Aufgaben und Funktionen dieser Anschlußgruppen sind in der angegebenen Zeitschrift sehr ausführlich beschrieben, wovon im vorliegenden Falle als von bekannten Tatsachen ausgegangen wird.

Wie aus der genannten Zeitschrift weiterhin hervorgeht, enthält jede der Anschlußgruppen jeweils eine Mehrzahl von Anschlußeinheiten. Diese dienen in bekannter Weise dem Anschluß von Teilnehmerleitungen, Verbindungsleitungen oder Übertragungssystemen mit verbindungsindividuell belegbaren Kanälen. Es gibt verschiedene Arten von Anschlußeinheiten, zum Beispiel solche für Analog-Teilnehmerleitungen, andere für Digital-Teilnehmerleitungen, andere für Analog-Verbindungsleitungen und dergleichen. Ebenso gibt es Anschlußeinheiten, die dem Anschluß jeweils einer Zeitmultiplex-Verbindungsleitung dienen, welche bekanntlich eine größere Anzahl von zum Beispiel vierundzwanzig oder dreißig verbindungsindividuell belegbaren PCM-Kanälen umfassen kann. Bankanntlich handelt es sich hierbei genaugenommen um jeweils ein Kanalpaar pro Verbindung, wobei jeweils ein Kanal für die eine Übertragungsrichtung und der andere für die andere Übertragungsrichtung vorgesehen ist.

In der genannten Zeitschrift ist im einzelnen beschrieben, welchem Zweck die genannten Anschlußeinheiten dienen. Eine Anschlußeinheit ist bei Analog-Teilnehmerleitungen bzw. Analog-Verbindungsleitungen jeweils für eine Mehrzahl von Leitungen vorgesehen. Anschlußeinheiten für zeitmultiplex betriebene Übertragungs-Systeme, die jeweils eine größere Anzahl von Kanalpaaren umfassen (siehe oben), sind so aufgebaut, das an eine Anschlußeinheit ein Übertragungssystem mit vierundzwanzig oder dreißig Kanalpaaren angeschlossen ist. In der genannten Zeitschrift ist ferner beschrieben, daß in einer Anschlußgruppe, die mit Anschlußeinheiten für Zeitmultiplex-Übertragungssysteme bestückt ist, insgesamt vier oder fünf solche Anschlußeinheiten vorgesehen sind. Ferner ist in der genannten Zeitschrift angegeben, daß innerhalb einer Anschlußgruppe Anschlußeinheiten mit einer Zeitmultiplex-Koppeleinrichtung der betreffenden Anschlußgruppe verbunden und über diese mit Kanälen des der betr. Anschlußgruppe entsprechenden Zeitmultiplex-Einganges und des entsprechenden Zeitmultiplex-Ausganges des zentralen Koppelfeldes verbindbar sind.

Bei dieser zahlenmäßigen Zuordnung geht es unter anderem immer auch darum, daß die Verkehrsbelastungen auf den verschiedenen Teilabschnitten der Verbindungswege möglichst gut aneinander angepaßt sind. Praktisch bedeutet dies, daß die Anzahl von Kanalpaaren, die die an die Anschlußeinheiten einer Anschlußgruppe angeschlossenen Zeitmultiplex-Verbindungsleitungen (PCM-Übertragungssysteme, von denen jedes einer anderen Verkehrsrichtung zugeordnet sein kann, die aber auch zu zweit oder zu mehreren jeweils gemeinsam ein und derselben Verkehrsrichtung zugeordnet sein können) insgesamt umfassen, etwa gleich der Anzahl von Kanalpaaren ist, die diejenige Zeitmultiplex-Leitung umfaßt, die die betreffende Anschlußgruppe mit dem zentralen Koppelfeld verbindet. So mögen also die Übertragungssysteme lu1 bis lu4 etwa die gleiche Anzahl von Kanalpaaren aufweisen, wie die Zeitmultiplex-Leitung L1.

Da es nun vorkommen kann, daß Zeitmultiplex-Leitungen störungsbedingt ausfallen können, was also auch für die Zeitmultiplex-Leitungen L1/1, L12 und L2/1 zutrifft, würde dies zur Folge haben, daß auch die Zeitmultiplex-Übertragungssysteme, die jeweils an die Anschlußeinheiten der betreffenden Anschlußgruppe angeschlossen sind, ebenfalls sämtlich nicht mehr für eine Verbindungsherstellung verfügbar sind. Da in der Vermittlungtechnik bei den vorgegebenen Werten und Daten bezüglich der Anzahlen von Kanalparen pro Verkehrsrichtung häufig nur ein einziges Übertragungssystem pro Verkehrsrichtung vorgesehen zu werden braucht, würde bei Ausfall der eine Anschlußgruppe mit dem zentralen Koppelfeld verbindenden Zeitmultiplex-Leitung auch das betreffende einzige Übertragungssystem pro Verkehrsrichtung ausfallen. Gleiches gilt bei Ausfall der dezentralen Steuereinrichtung, z.B. GP1, einer Anschlußgruppe, z. B. LTG1.

Um eine solche unvorteilhafte Möglichkeit auszuschließen, ist vorgesehen, daß jeweils zwei Anschlußgruppen paarweise einander zugeordnet sind. Was diesbezüglich für die beiden in der Zeichnung auszugsweise dargestellten Anschlußgruppen LTG1 und LTG2 gilt, gilt ebenso für alle weiteren Anschlußgruppen mit Anschlußeinrichtungen, an die PCM-Übertragungssysteme in der angegebenen Weise angeschlossen sind. Weiterhin ist vorgesehen, daß die Anschlußeinrichtungen 1 DIU 1 bis 1 DIU 4 und 2 DIU 1 bis 2 DIU 4 jeder dieser beiden Anschlußgruppen LTG1 und LTG2, die im Normalbetrieb mit der Zeitmultiplex-Koppeleinrichtung GS 1 bzw. GS 2 ihrer eigenen Anschlußgruppe LTG1 bzw. LTG2 verbunden sind, im Notbetrieb einer dieser beiden Anschlußgruppen, z.B. LTG2, zu der Zeitmultiplex-Koppeleinrichtung, z.B. GS 1, der jeweils anderen Anschlußgruppe, zum Beispiel LTG1 umschaltbar sind. Hierzu sind Umschalter 1 d 1 bis 1 d 4 und 2 d 1 bis 2 d 4 vorgesehen. Diese sind in der Zeichnung in der dem Normalbetrieb entsprechenden Ruhelage dargestellt. Sie werden bei einem Wechsel vom Normalbetrieb zum Notbetrieb aus ihrer dargestellten Ruhelage in ihre Arbeitslage umgeschaltet. Die Notbetriebssituation besteht dann und ist abhängig davon,daß bei einer Anschlußgruppe störungsbedingt ein Ausfall der oben angegebenen Art eintritt.

Werden nun die Umschalter 2 d 1 bis 2 d 4 bei einem Übergang von der Normalbetriebs-Situation in die Notbetriebs-Situation aufgrund eines störungsbedingten Ausfalles der Zeitmultiplex-Leitung L2 aus ihrer dargestellten Ruhelage in ihre Arbeitslage umgeschaltet, so sind von diesem Zeitpunkt an die Anschlußeinheiten 2DIU bis 2DIU4 der Anschlußgruppe LTG2 mit der Zeitmultiplex-Koppeleinrichtung GS1 der Anschlußgruppe LTG1 verbunden. Infolgedessen können bei einem Ausfall der Zeitmultiplex-Leitung L2 die PCM-Übertragungssysteme 2u1 bis 2u4 mit ihren verbindungsindividuell belegbaren Kanälen weiterhin betrieben werden. Jedes dieser PCM-Übertragungssysteme kann einzeln einer eigenen Verkehrsrichtung zugeordnet sein. Es können auch zwei oder mehr PCM-Übertragungssysteme einer Verkehrsrichtung zugeordnet sein, d.h., sie können also in vermittlungstechnischer Hinsicht ein gemeinsames Bündel von Kanalpaaren bilden.

Bei einer in der zuvor beschriebenen Weise durchgeführten Umschaltung werden natürlich die bis dahin über Kanalpaare der Zeitmultiplex-Leitung L2 bestehenden Verbindungen unterbrochen. Es kann aber auch vorgesehen werden, daß für den Fall, daß diejenigen Kanäle, die für Nachrichtenverbindungen (z.B. Sprechverbindungen) belegt sind, nicht mitbetroffen sind von der eingetretenen Störung, die entsprechenden bereits bestehenden Verbindungen bestehen bleiben. Dies aber wird in aller Regel ohnehin der Fall sein, und zwar alleine aufgrund des Eintretens derjenigen Betriebsstörung, die Veranlassung zu der anschließenden Umschaltung gegeben hat. In an sich bekannter Weise erhalten die beteiligten Teilnehmer ein entsprechendes Hörzeichen, zum Beispiel Besetztton, und sie können die gewünschten Verbindungen dann erneut aufbauen. Entsprechendes gilt für den Fall einer Rück-Umschaltung von der Notbetriebs-Situation zu der Normalbetriebs-Situation, zum Beispiel also, wenn die Umschalter 2d1 bis 2d4 wieder in ihre dargestellte Ruhelage zurückgeführt werden. Auch in diesem Falle werden bestehende Verbindungen unterbrochen und müssen bzw. können von den betreffenden Teilnehmern neu aufgebaut werden, es sei denn, daß - wie zuvor angegeben - die betreffenden Verbindungen bestehen bleiben können. - Entsprechendes gilt umgekehrt für den Fall, daß anstatt der Anschlußgruppe LTG1 aus der Normalbetriebs-Situation in die Notbetriebs-Situation übergeht und umgekehrt.

Geht eine Anschlußgruppe, z.B. die Anschlußgruppe LTG2, in der beschriebenen Weise aus der Normalbetriebs-Situation in die Notbetriebs-Situation über, so können sämtliche Kanalpaare, die von den Übertragungssystemen 1u1 bis 2u4 umfaßt werden, nur noch über die Zeitmultiplex-Leitung L1 bzw. deren Kanalpaare weitervermittelt werden. Dies geschieht in der Zeitmultiplex-Koppeleinrichtung GS1 in an sich bekannter Weise (was die Durchschaltevorgänge innerhalb dieser Zeitmultiplex-Koppeleinrichtung selber anbetrifft). Infolgedessen trifft ser Umschalte-Situation (bezüglich der Umschalter 2d1 bis 2d4) eine wesentlich höhere Verkehrsbelastung.

Da sich bekanntlich grundsätzlich über die Kanalpaare dieser Zeitmultiplex-Leitung L1 zahlenmäßig nicht mehr Verbindungen zu jedem Zeitpunkt durchschalten lassen, als Kanalpaare überhaupt vorhanden sind, können die Kanalpaare der Übertragungssysteme 1u1 bis 2u4 nur noch mit etwa der halben Verkehrsbelastung ausgelastet werden. Das bedeutet, daß im Mittel die Kanalpaare bei jedem dieser Übertragungssysteme 1u1 bis 2u4 zum Teil nicht benutzt werden können. Jedoch ist erfindungsgemäß sichergestellt, daß jedes dieser Übertragungssysteme überhaupt weiterbetrieben werden kann. Dadurch ist also sichergestellt, daß es für jede der betreffenden Verkehrsrichtungen noch Verbindungsmöglichkeiten gibt, wenngleich diese zahlenmäßig eingeschränkt sind. Es muß also keine Verkehrsrichtung überhaupt ausfallen, wenn eine der Zeitmultiplex-Leitungen L1/1, L1/2, L2/1, L2/2 (oder eine andere) störungsbedingt ausfällt. Wie im bekannten Falle sind die Zeitmultiplex-Anschlußleitungen L1/1, L1/2 und L2/1, L2/2 von jeder der Anschlußgruppen (LTG1, LTG2) zum Koppelfeld gedoppelt, ebenso wie das Koppelfeld selber (s.o.!), und jede Anschlußgruppe ist über die eine und die andere Zeitmultiplexleitung einzeln mit dem einen und dem anderen dieser beiden Koppelfelder verbunden. Bei Auftreten von Fehlern an zentraler Stelle, z.B. im Koppelfeld K, erfolgt in bekannter Weise eine Umschaltung ohne bzw. zur Vermeidunmg von Betriebsunterbrechungen.

In diesem Zusammenhang kann auch vorgesehen werden, daß die Notbetriebs-Situation auch dahingehend ausgewertet wird, daß von den Kanalpaaren jedes der Übertragungssystem 1u1 bis 2u4 die Hälfte gesperrt wird. Die gesperrten Kanalpaare sind dann für Neubelegungen für neu herzustellende Verbindungen unzugänglich, solange die Notbetriebs-Situation fortbesteht. Es ist auch möglich, die Notbetriebs-Situation zu denjenigen Vermittlungsstellen hin zu melden, mit denen die jeweilige Vermittlungsstelle über die betreffenden Übertragungssysteme 1u1 bis 2u4 verbunden ist. Es kann vorgesehen werden, daß auch in diesen anderen Vermittlungsstellen die betreffenden Übertragungssysteme hinsichtlich der in ihnen enthaltenen Kanalpaare zum Teil als gesperrt markiert werden, bis der Zustand der Notbetriebs-Situation wieder beendet wird. Hierdurch möge auch in anderen Vermittlungsstellen (ebenso wie in der unmittelbar betroffenen Vermittlungsstelle) die Wegesuche sowie die Leitweglenkung beeinflußt werden, z.B. hinsichtlich einer entsprechenden Änderung des Wegesuchprogrammes und/oder der jeweils geltenden und praktisch hinsichtlich der Wegeauswahl zum Tragen kommenden Leitwegregeln.

Wie bereits weiter oben erwähnt wurde, werden die Verbindungen über das zentrale Koppelfeld K hergestellt. Hierbei wirkt der zentrale Prozessor Z mit. In dem zentralen Prozessor sind die Anschlußgruppen, die in ihnen jeweils enthaltenen Anschlußeinheiten sowie die über jede derselben geführten Kanalpaare mit Hilfe von Adressen ansteuerbar. Es kann nun vorgesehen sein, daß jede der Anschlußeinheiten sowohl mit Hilfe einer Normalbetriebs-Adresse als auch mit Hilfe einer Notbetriebs-Adresse vom zentralen Prozessor her ansteuerbar ist. Diese Normalbetriebs-Adressen und Notbetriebs-Adressen sind also im Zugriff auf diese Adressen je nach betriebsgemäßem Bedarf. In diesem Falle ist nun vorgesehen, daß die Anschlußeinheiten, die mit PCM-Übertragungssystemen beschaltet sind, von dem zentralen Prozessor mittels jeweils einer Normalbetriebs-Adresse und jeweils einer Notbetriebs-Adresse ansteuerbar sind, und daß bei Eintritt einer Betriebsstörung in einer Anschlußgruppe, z.B. LTG2, bzw. deren Gruppensteuereinrichtung, z.B. GP2, die beim Normalbetrieb derselben im zentralen Prozessor gesperrten Notbetriebs-Adressen der betreffenden Anschlußeinheiten, z.B. 2DIU1 bis 2DIU4, entsperrt und stattdessen die Normalbetriebs-Adressen dieser Anschlußeinheiten gesperrt werden. Auf nicht im einzelnen dargestellte Weise wird also dem zentralen Prozessor gemeldet, daß eine Anschlußgruppe, zum Beispiel LTG2, vom Normalbetrieb in den Notbetrieb übergeht. Aufgrund dieser meldung nimmt der zentrale Prozessor den zuvor angegebenen Vorgang der Entsperrung der Notbetriebs-Adressen der betreffenden Anschlußeinheiten sowie der Sperrung der Normalbetriebs-Adressen dieser Anschlußeinheiten vor. Dies gilt in gleicher Weise auch für Ansteuer-Adressen der Kanalpaare, die über die betreffenden Anschlußeinheiten geführt sind. In diesem Zusammenhang ist außerdem vorgesehen, daß die Anschlußeinheiten, zum Beispiel 2DIU1 bis 2DIU4 von dem zentralen Prozessor mittels der Normalbetriebs-Adresse über deren zugeordnete Anschlußgruppe, zum Beispiel LTG2, direkt und mittels der Notbetriebs-Adresse über die jeweils andere Anschlußgruppe, zum Beispiel LTG1 ansteuerbar sind.

In der gleichen Weise, wie die zuvor beschriebene Umschaltung der Verbindungswege (die gesamten Kanalpaare) mittels der Umschalter 2d1 bis 2d4 erfolgt, wird auch die zentrale Taktversorgung der betreffenden Anschlußeinheiten beim Übergang vom Normalbetrieb in den Notbetrieb von der zugeordneten Anschlußgruppe zu der jeweils anderen Anschlußgruppe umgeschaltet. Dadurch ist sichergestellt, daß die Anschlußeinheiten mit derjenigen Anschlußgruppe taktsychron laufen, zu der hin die jeweilige Umschaltung erfolgt ist. In der gleichen Weise kann auch die Versorgung mit den erforderlichen Betriebsspannung für die betreffenden Anschlußeinheiten von derjenigen Anschlußgruppe, die vom Normalbetrieb in den Notbetrieb übergegangen ist, zu der jeweils anderen Anschlußgruppe hin umgeschaltet werden. Günstiger noch ist es, die Einrichtungen für die Betriebsspannungsversorgung redundant, d.h. ausfallsicher auszuführen, z.B. zweifach für alle Anschlußeinheiten der beiden Anschlußgruppen.

Gemäß einer anderen, besonders wesentlichen Ausführungsform des hier beschriebenen Ausführungsbeiles ist vorgesehen, daß die Anschlußeinheiten von dem zentralen Prozessor über den Anschlußgruppen zugeordnete Signalkanäle mittels jeweils einer Adresse ansteuerbar sind, die einen die jeweilige Anschlußgruppe bezeichnenden ersten Adressenteil und einen die jeweilige Anschlußeinheit innerhalb jener bezeichnenden zweiten Adressenteil umfaßt. Dies wurde bereits erwähnt. Mit Hilfe des ersten Adressenteils der Adresse der betreffenden Anschlußeinheit wird jeweils diejenige Anschlußgruppe angesteuert, zu der die betreffende Anschlußeinheit gehört. Die Ansteuerung der Anschlußgrurppe erfolgt in der angegebenen Weise dadurch, daß anhand des ersten Adressenteils eine Einstellinformation im Adressen-Signal-Umsetzer U1/U2 gebildet wird, die über den Steuerweg u dem elektronischen Wähler W zugeführt wird, wodurch die Eingabe-Ausgabe-Einrichtung G über die Puffereinrichtung MB mit demjenigen über das Koppelfeld K im durchgeschalteten Zustand bereitgehaltenen Signalkanal verbunden wird, der über eine Zeitmultiplexleitung, z. B. L1/1 zu der betreffenden Anschlußgruppe hin führt. Es ist also ein Adressen-Signalkanal-Umsetzer G im zentralen Prozessor vorgesehen, der bei Vorliegen einer Information für eine Anschlußeinheit aus der der Information beigefügten Adresse anhand deren erstem Adressenteil eine von dem Prozessor zur Ansteuerung des betreffenden Signalkanals verwendete Signalkanalnummer abgibt. Diese Signalkanalnummer bezeichnet also den zuvor genannten betreffenden Signalkanal. Diese Signalkanalnummer dient als Einstellinformation, die über den Signalweg u zu dem genannten elektronischen Wähler W hin zu dessen Einstellung auf den betreffenden Signalkanal weitergegeben wird. Dieser elektronische Wähler kann in jeder beliebigen Weise auch als Koppler ausgebildet sein.- Der Adressen-Signalkanal-Umsetzer G im zentralen Prozessor ZW kann selbstverständlich auch räumlich gesondert von diesem vorgesehen sein. Er dient im übrigen in an sich bekannter Weise der Abwicklung der Eingabeprozeduren und Ausgabeprozeduren des zentralen Prozessors ZW.

Wie bereits ausgeführt wurde, wird bei jeweiliger Ansteuerung eines Signalkanals zwecks Ansteuerung der betreffenden Anschlußgruppe die genannte Adresse sowie die Information über diesen Signalkanal übertragen. Adresse und Information werden über den Signalkanal zu der betreffenden Anschlußgruppe und hier über die erwähnte Zeitmultiplex-Koppeleinrichtung, z. B. GSI, zunächst zu der betreffenden dezentralen Steuereinrichtung, z. B. GP1, übertragen. Diese erkennt anhand der Adresse, und zwar insbesondere anhand des darin enthaltenen zweiten Adressenteils, zu welcher der Anschlußeinheiten die betreffende Information weiterzuleiten ist.

In dem zuvor beschriebenen Zusammenhang sei zunächst davon ausgegangen, daß der weiter oben bereits erwähnte Adressenteil diejenige Anschlußgruppe bezeichnet, zu der hin Adresse und Information in der zuvor beschriebenen Weise übertragen wurden. Der zweite Adressenteil gibt nun an, welche der Anschlußeinheiten innerhalb der betreffenden Anschlußgruppe, z.B. LTG1, diejenige ist, zu welcher hin die betreffende Information weiterzuleiten ist. Es sei angenommen, daß dies die Anschlußeinheit 1DIU2 sei. Weiterhin sei angenommen, daß sich die betreffende Anschlußgruppe, z.B. LTG1 im Normalbetriebszustand befindet. In diesem Falle ist also der Umschalter 1d2 in der in der Zeichnung dargestellten Ruhelage. Die Anschlußeinheit 1DIU2 ist folglich in diesem Betriebszustand über die Ruheseite des Umschalters 1d2 mit der Zeitmultiplex-Koppeleinrichtung GS1 der Anschlußgruppe LTG1 verbunden.

Wie zuvor erläutert, hat die dezentrale Steuereinrichtung GP1 mit der Information, die für die Anschlußeinheit 1DIU2 bestimmt ist, auch die Adresse empfangen und zwischengespeichert, die aus einem ersten, die Anschlußgruppe LTG1 bezeichnenden Adressenteil und einem zweiten, die Anschlußeinheit 1DIU2 in ihr bezeichnenden zweiten Adressenteil umfaßt. Anhand des ersten Adressenteils erkennt die dezentrale Steuereinrichtung GP1, daß die betreffende Information an eine Anschlußeinheit weiterzuleiten ist, die zu der gleichen Anschlußgruppe LTG1 gehört. Anhand des zweiten Adressenteils erkennt die dezentrale Steuereinrichtung GP1, daß die Informationen zu der Anschlußeinheit 1DIU2 weiterzuleiten ist. Aufgrund dessen steuert die dezentrale Steuereinrichtung GP1 die Zeitmultiplex-Koppeleinrichtung GS1 so, daß ein Übertragungsweg von der dezentralen Steuereinrichtung GP1 zur Anschlußeinheit 1DIU2 durchgeschaltet wird, der also über die Ruheseite des Umschalters 1d2 verläuft.

In Abwandlung von dem zuvor Beschriebenen kann auch vorgesehen werden, daß die dezentrale Steuereinrichtung GP1 in dem angegebenen Zusammenhang nicht auch die Information mit der betreffenden Adresse empfängt, sondern lediglich die Adresse selber und anhand derselben einen direkten Übertragungsweg für die Information von dem über die Zeitmultiplex-Leitung L1/1 verlaufenden Signalkanal über die Zeitmultiplex-Koppeleinrichtung GS1, die Ruheseite des Umschalters 1d2 zur Anschlußeinrichtung 1DIU2 durchschaltet.

In diesem Falle wird also die Adresse über den Signalkanal in der denzentralen Steuereinrichtung GP1 empfangen und hier zur Durchschaltung eines Direktweges von dem genannten Signalkanal zu der betreffenden Anschlußeinheit verwendet. In diesem Falle würde also eine Zwischenspeicherung der betreffenden Information in der dezentralen Steuereinrichtung GP1 entfallen.

Im Zusammenhang der für die Erfindung besonders wesentlichen Ausführungsform des hier beschriebenen Ausführungsbeispieles ist noch die spezielle Notbetriebssituation zu erläutern. Wie bereits erwähnt wurde, kann eine störungsbedingte Notbetriebssituation dadurch verursacht sein, daß der Signalkanal zwischen einer Anschlußgruppe und dem zentralen Prozessor nicht benutzbar ist, oder daß die dezentrale Steuereinrichtung, z.B. GP2, und/oder die Zeitmultiplex-Koppeleinrichtung, z.B. GS1, der betreffenden Anschlußgruppe nicht die erforderliche Funktionsfähigkeit aufweist. Dies ist für den zentralen Prozessor anhand der kontinuierlichen Durchführung eines Überwachungsverfahrens erkennbar, daß im einzelnen in der bereits genannten Zeitschrift "telcom report", sowie in der deutschen Offenlegungsschrift 3 106 903 im einzelnen beschrieben ist. Erkennt der zentrale Prozessor eine Betriebsstörung, die z.B. die Anschlußgruppe LTG2 betrifft, so erfolgt der gesamte weitere Datenaustausch zwischen zentralem Prozessor ZW und den Anschlußeinheiten 2DIU1 bis 2DIU4 der von der Betriebsstörung betroffenen Anschlußgruppe LTG2 für die Dauer der Betriebsstörung über die Anschlußgruppe LTG1. Hierzu werden sämtliche Umschalter in der betroffenen Anschlußgruppe LTG2 aus ihrer dargestellten Ruhelage in ihre Arbeitslage umgelegt. Dies kann auf zweierlei Weise erfolgen. Es kann vorgesehen sein, daß die aufgetretene Betriebsstörung innerhalb der von ihr betroffenen Anschlußgruppe selber erkannt wird. Dies kann dadurch geschehen, daß der der ständigen Überprüfung der vollen Funktionsfähigkeit jeder der Anschlußgruppen dienende Datenaustausch mit dem zentralen Prozessor gemäß der zuletzt genannten deutschen Offenlegungsschrift nicht mehr stattfindet, und daß dies innerhalb der betreffenden Anschlußgruppe erkannt wird. Aufgrund dessen kann die erwähnte Betätigung der Umschalter 2d1 bis 2d4 innerhalb der betreffenden Anschlußgruppe durch ihre dezentrale Steuereinrichtung, z.B. GP2 selber vorgenommen werden. Jedoch kann auch vorgesehen sein, daß der zentrale Prozessor ZW die die Anschlußgruppe LTG2 betreffende Betriebsstörung erkennt, und daß er eine entsprechende Information hierüber an die dezentrale Steuereinrichtung GP1 der paarweise zugeordneten Anschlußgruppe LTG1 überträgt, und daß diese dann einen Befehl zur Betätigung der genannten vier Umschalter in der Anschlußgruppe LTG2 an diese überträgt.

Im Zustand der die Anschlußgruppe LTG2 betreffenden Betriebsstörung sind also die Umschalter 2d1 bis 2d4 betätigt. Dementsprechend sind die Anschlußeinheiten 2DIU1 bis 2DIU4 mit der Zeitmultiplex-Koppeleinrichtung GS1 der Anschlußgruppe LTG1 verbunden.

Erkennt der zentrale Prozessor ZW die die Betriebsstörung der Anschlußgruppe LTG2 betreffende Funktionsstörung, erkennt er also, daß der weitere Datenaustausch mit den entsprechenden Anschlußeinheiten 2DIU1 bis 21DIU4 über den Signalkanal der Anschlußgruppe LTG1 abzuwickeln ist, so gibt er eine entsprechende Information auch an den Adressen-Signal-Umsetzer U1/U2 in der Eingabe-Ausgabe-Einrichtung G. Durch diese Information wird die die Anschlußeinheiten 2DIU1 bis 2DIU4 in der Anschlußgruppe LTG2 betreffende Signalkanalnummer vorübergehend geändert. Praktisch bedeutet dies, daß für die Dauer der Betriebsstörung der Anschlußgruppe LTG2 bei Ansteuerung einer ihrer Anschlußeinheiten der Adressen-Signalkanal-Umsetzer bei Erhalt einer Adresse mit einem die Anschlußgruppe LTG2 bezeichnenden ersten Adressenteil eine Steuerinformation über den Steuerweg u zum elektronischen Wähler W hin abgibt, die bewirkt, daß in diesem Falle anstelle des Signalkanals der Anschlußgruppe LTG2 vielmehr der Signalkanal der Anschlußgruppe LTG1 durch den elektronischen Wähler W angesteuert wird. Der zentrale Prozessor gibt also zur Ansteuerung einer Anschlußeinheit 2DIU1 bis 2DIU4 im Zustand der Betriebsstörung der Anschlußgruppe LTG2 die Adresse und die Information für die betreffende Anschlußgruppe ebenso, wie im Zustand des Normalbetriebes der Anschlußgruppe LTG2 ab. Im Adressen-Signalkanal-Umsetzer U1/U2 ist für die Dauer der Betriebsstörung der Anschlußgruppe LTG2 festgehalten, daß anstelle ihres Signalkanales vielmehr der Signalkanal der Anschlußgruppe LTG1 anzusteuern ist. Die die Betriebsstörung der Anschlußgruppe LTG2 betreffende Umleitung der Informationen für ihre Anschlußeinheiten erfolgt also in der Einbgabe-Ausgabe-Einrichtung mit Hilfe des elektronischen Wähles W aufgrund der vorläufigen Änderung der im Adressen-Signalkanal-Umsetzer U1/U2 gespeicherten Signalkanalnummern, die als Steuerinformationen fallweise aus jenem abgerufen und zur Steuerung des Wählers W diesem zugeführt werden.

Wird nun eine Information samt der zu ihr gehörenden, aus erstem Adressenteil und zweitem Adressenteil bestehenden Adresse störungsbedingt zur Anschlußgruppe LTG1 geschickt, obwohl die betreffende Information für eine der Anschlußeinheiten 2DIU1 bis 2DIU4 bestimmt ist, so erkennt die dezentrale Steuerinrichtung GP1 anhand des ersten Adressenteils zunächst, daß die betreffende Information für eine Anschlußeinheit der jeweils anderen Anschlußgruppe bestimmt ist. Anhand des zweiten Adressenteils erkennt diese dezentrale Steuereinrichtung die jeweilige Anschlußeinheit, für die die Information bestimmt ist. Aufgrund des ersten Adressenteils und aufgrund des zweiten Adressenteils leitet die dezentrale Steuerinrichtung GP1 die betreffende Information zu derjenigen Anschlußeinheit der anderen Anschlußgruppe LTG2 weiter, für die sie bestimmt ist. Hierzu schaltet die dezentrale Steuereinrichtung GP1 einen Übertragungsweg über die Zeitmultiplex-Koppeleinrichtung GS1 durch, über den die Information dann übertragen wird. Dies erfolgt über einen entsprechenden Anschluß der Zeitmultiplex-Koppeleinrichtung GS1 und die Arbeitsseite des betreffenden Umschalters, z. B. 2d2. Auch in diesem Falle kann die betreffende Information in der dezentralen Steuereinrichtung GP1 zwischengespeichert werden und dann von ihr aus zu der betreffenden Anschlußeinheit, z. B.

2DIU2 hin übertragen werden, oder es kann in der oben beschriebenen Weise vorgesehen sein, daß auch in dem hier beschriebenen Betriebsfall ein Direktweg von dem über die Zeitmultiplexleitung L1/1 verlaufendenden Signalkanal über die Zeitmultiplex-Koppeleinrichtung GS1 und über den in Arbeitslage befindlichen Umschalter 2d2 zur Anschlußeinrichtung 2DIU2 durchgeschaltet wird.

Auf die zuvor berschriebene Weise können sowohl Informationen vom zentralen Prozessor zu jeder der Anschlußeinheiten, als auch in umgekehrter Richtung übertragen werden. Im letzterem Falle kann die vom zentralen Prozessor zur betreffenden Anschlußeinheit übertragene Information eine Abrufinformation sein, aufgrund deren in umgekehrter Richtung dann die zu übertragende und abgerufene Information von der betreffenden Anschlußeinrichtung zum zentralen Prozessor hin übertragen wird. Auf die gleiche Weise kann auch die Informationsübertragung von Anschlußgruppe zu Anschlußgruppe erfolgen, wie sie in der deutschen Patentschrift 3 128 365 beschrieben ist. Auf diese Weise können also Informationen von einer Anschlußeinheit einer Anschlußgruppe zu einer Anschlußeinheit einer anderen Anschlußgruppe übertragen werden, wobei diese Informationen vom zentralen Prozessor ZW nicht aufgenommen werden müssen, sondern nach Ankunft von einer Anschlußeinheit in der Eingabe-Ausgabe-Einrichtung G von hier aus direkt zu der betreffenden Anschlußeinrichtung übertragen werden, für die sie bestimmt sind. Dies ist möglich durch die in der zuletzt angegebenen Patentschrift beschriebene Weiterleitung der Informationen innerhalb der Eingabe-Ausgabe-Einrichtung G.

**Ansprüche**

1. Schaltungsanordnung für zentralgesteuerte Zeitmultiplex-Fernmeldevermittlungsanlagen, insbesondere PCM-Fernsprechvermittlungsanlagen, mit einem mehrstufigen, Zeitmultiplex-Eingänge und Zeitmultiplex-Ausgänge aufweisenden zentralen Koppelfeld (K) und einem zentralen Prozessor (ZW), und mit einer Mehrzahl von einem Anschluß von Zeitmultiplex-Verbindungsleitungen (lul - lu4) dienenden Anschlußgruppen (LTG1, LTG2), von denen jede (über L1/1 - L2/2) an einen Zeitmultiplex-Eingang und einen Zeitmultiplex-Ausaang des Koppelfeldes (K) angeschlossen ist, und von denen jede eine Mehrzahl von dem Anschluß jeweils einer Zeitmultipex-Verbindungsleitung (lul - 2u4) dienenden Anschlußeinheiten (1DIU1 - 2DIU4) aufweist, die ihrerseits mit einer zu der betreffenden Anschlußgruppe (z.B. LTGI)

gehörenden Zeitmultiplex-Koppeleinrichtung (z.B. GS1) über Intern-Zeitmultiplex-Verbindungswege verbunden und über die Zeitmultiplex-Koppeleinrichtung (z.B. GSI) mit Kanälen des der jeweiligen Anschlußgruppe (z.B. LTG1) entsprechenden Zeitmultiplex-Einganges und des entsprechenden Zeitmultiplex-Ausganges des Koppelfeldes (K) verbindbar sind,

**dadurch gekennzeichnet,**

daß jeweils zwei Anschlußgruppen (LTG1, LTG2) paarweise einander zugeordnet sind, und daß die Anschlußeinheiten (1DIU1 - 2DIU4) jeder dieser beiden Anschlußgruppen (LTG1, LTG2) , die im Normalbetrieb über die Intern-Zeitmultiplex-Verbindungswege jeweils mit der Zeitmultiplex-Koppeleinrichtung (z.B. GS1) ihrer eigenen Anschlußgruppe (z.B. LTG1) verbunden sind, im Notbetrieb einer der beiden Anschlußgruppen (z.B. LTG1) zu der ZeitmultiplexKoppeleinrichtung (z.B. GS2) der jeweils anderen Anschlußgruppe (z.B. LTG2) in der Weise umschaltbar sind, daß die von den Anschlußeinrichtungen (z.B. 1DIU1 - DIU4) einer Anschlußgruppe (z.B. LTG1) zu deren eigener Zeitmultiplex-Koppeleinrichtung (z.B. GS1) führenden Intern-Zeitmultiplex-Verbindungswege von dieser Zeitmultiplex-Koppeleinrichtung (z.B. GS1) abgetrennt und zu der Zeitmultiplex-Koppeleinrichtung (z.B. GS2) der jeweiligen Partner-Anschlußgruppe (z.B. LTG2) durchgeschaltet werden.

2. Schaltungsanordnung nach Anspruch 1, **dadurch gekenneichnet**, daß die Anschlußeinheiten von dem zentralen Prozessor mittels jeweils einer Normalbetriebsadresse und jeweils einer Notbetriebsadresse ansteuerbar sind, und daß bei Eintritt einer Betriebsstötung in einer Anschlußgruppe bzw. deren Gruppensteuereinrichtung die beim Normalbetrieb derselben im zentralen Prozessor gesperrten Notbetriebsadressen der betreffenden Anschlußeinheiten entsperrt und stattdessen die Normalbetriebsadressen gesperrt werden.

3. Schaltungsanordnung nach Anspruch 2, **dadurch gekennzeichnet,** daß die Anschlußeinheiten von dem zentralen Prozessor mittels der Normalbetriebsadresse über deren zugeordnete Anschlußgruppe und mittels der Notbetriebsadresse über die jeweils andere Anschlußgruppe ansteuerbar sind.

4. Schaltungsanordnung nach Anspruch 1, **dadurch gekennzeichnet,** daß die Anschlußeinheiten von dem zentralen Prozessor über den Anschlußgruppen zugeordnete Signalkanäle mittels jeweils einer Adresse ansteuerbar sind, die einen die jeweilige Anschlußgruppe bezeichnenden ersten Adressenteil und einen die jeweilige Anschlußeinheit innerhalb jener bezeichnenden zweiten Adressenteil umfaßt, daß ein Adressen-Signalkanal-Umsetzer im zentralen Prozessor bei Vorliegen einer Information für eine Anschlußeinheit aus der der Information beigefügten Adresse anhand deren erstem Adressenteil eine von dem Prozessor zur Ansteuerung des betreffenden Signalkanals verwendete Signalkanalnummer abgibt, daß nach dessen Ansteuerung die Adresse sowie die Information über denselben übertragen wird, und daß im Notbetrieb der Prozessor die Adresse der betreffenden Anschlußgruppe im Adressen-Signalkanal-Umsetzer gegen die der anderen auswechselt, und umgekehrt bei Aufhebung des Notbetriebes.

## Claims

1. Circuit arrangement for centrally controlled time division multiplex telecommunication exchanges, preferably PCM telephone exchanges, with a multi-stage central switching network (K) having time division multiplex inputs and time division multiplex outputs and a central processor (ZW) and with a plurality of line/trunk groups (LTG1, LTG2), serving for a connection of time division multiplex interexchange trunks (1ul - 1u4), each of which groups is connected (via L1/1 - L2/2) to a time division multiplex input and a time division multiplex output of the switching network (K), and each of which groups has a plurality of line/trunk units (1DIU1 - 2DIU4), serving for the connection in each case of a time division multiplex interexchange trunk (1u1 - 2u4), which units are for their, part connected to a time division multiplex switching device (e.g. GS1) associated with the particular line/trunk group (e.g LTG1), via internal time division multiplex connecting paths and can be connected via the time division multiplex switching devices (e.g. GS1) to channels of the time division multiplex input corresponding to the respective line/trunk group (e.g. LTG1) and of the corresponding time division multiplex output of the switching network (K), characterized in that in each case two line/trunk groups (LTG1, LTG2) are assigned to each other in pairs, and in that the line/ trunk units (1DIU1-2D2U4) of each of these two line/trunk groups (LTG1, LTG2), which in normal operation are connected in each case to the time division multiplex switching device (e.g. GS1) of their own line/trunk group (e.g. LTG1) via the internal time division multiplex connecting paths, can be changed over in emergency operation of one of the two line/trunk groups (e.g. LTG1) to the time division multiplex switching device (e.g. GS2) of what is respectively the other line/trunk group (e.g. LTG2) in such a way that the internal time division multiplex connecting paths leading from the line/trunk device (e.g. 1DIU1 - DIU4) of a line/trunk group (e.g. LTG1) to their own time division multiplex switching device (e.g. GS1) are separated from this time division multiplex switching device (e.g. GS1) and through-connected to the time division multiplex switching device (e.g. GS2) of the respective partner line/trunk group (e.g. LTG2).

2. Circuit arrangement according to Claim 1, characterized in that the line/trunk units can be driven by the central processor by means of in each case a normal operation address and in each case an emergency operation address, and in that, in the event of an operational difficulty occurring in a line/trunk group or its group control device, the emergency operation addresses of the particular line/trunk units, which addresses are blocked in the central processor during normal operation of the said line/trunk group or its group control device, are unblocked and instead the normal operation addresses are blocked.

3. Circuit arrangement according to Claim 2, characterized in that the line/trunk units can be driven by the central processor by means of the normal operational address via their assigned line/trunk group and by means of the emergency operation address via what is respectively the other line/trunk group.

4. Circuit arrangement according to Claim 1, characterized in that the line/trunk units can be driven by the central processor, via signal channels assigned to the line/trunk groups, by means of in each case an address which comprises a first address part, designating the respective line/trunk group, and a second address part, designating the respective line/trunk unit within the said line/trunk group, in that, if information for a line/trunk unit is received by an address signal channel converter in the central processor, said converter uses the first address part of the address enclosed in the information to issue a signal channel number used by the processor for driving the particular signal channel, in that after the said channel has been driven, the address and the information on the same are transmitted, and in that, in emergency operation, the processor exchanges the address of the particular line/trunk group in the address signal channel converter for that of the other one, and conversely when emergency operation is cancelled.

**Revendications**

1. Montage pour des installations de télécommunications à multiplexage temporel, à commande centrale, notamment des installations de commutation téléphonique MIC, comportant un champ de couplage central (K) possédant des entrées de multiplexage temporel et des sorties de multiplexage temporel à plusieurs étages, et un processeur central (ZW), et une multiplicité de modules de raccordement (LTG1,LTG2), qui sont utilisés pour le raccordement de lignes de communication à multiplexage temporel (1u1-1u4) et dont chacune est raccordée (par l'intermédiaire de L1/1-L2/2) à une entrée de multiplexage temporel et à une sortie de multiplexage temporel du champ de couplage (K), et dont chacune comporte une multiplicité d'unités de raccordement (1DIU1-2DIU4), qui sont utilisées pour le raccordement respectivement d'une ligne de communication à multiplexage temporel (1u1-2u4) et sont reliées pour leur part à un dispositif de couplage à multiplexage temporel (par exemple GS1) faisant partie du module de raccordement considéré (par exemple LTG1), par l'intermédiaire de voies internes de communication à multiplexage temporel et peuvent être raccordés, par l'intermédiaire du dispositif de couplage à multiplexage temporel (par exemple GS1) à des canaux de l'entrée de multiplexage temporel, qui correspond au module de raccordement respectif (par exemple LTG1), et à la sortie correspondante de multiplexage temporel du champ de couplage (K), caractérisé par le fait que respectivement deux modules de raccordement (LTG1,LTG2) sont associés par couples et que les unités de raccordement (1DIU1-2DUI4) de chacun de ces deux modules de raccordement (LTG1,LTG2), qui sont reliés, pendant le fonctionnement normal, par l'intermédiaire des voies internes de communication à multiplexage temporel, respectivement au dispositif de couplage à multiplexage temporel (par exemple GS1) de leur propre module de raccordement (par exemple LTG1), peuvent être commutées, dans le cas d'un fonctionnement d'urgence de l'un des deux modules de raccordement (par exemple LTG1) au dispositif de couplage à multiplexage temporel (par exemple GS2) de l'autre groupe respectif de raccordement (par exemple LTG2) de telle sorte que les voies internes de communication à multiplexage temporel, qui relient les dispositifs de raccordement (par exemple 1DIU1-DIU4) d'un module de raccordement (par exemple LTG1) à son propre dispositif de couplage à multiplexage temporel (par exemple GS1), sont séparées de ce dispositif de couplage à multiplexage temporel (par exemple GS1) et sont interconnectées directement au dispositif de couplage à multiplexage temporel (par exemple GS2) du module de raccordement respectif correspondant (par exemple LTG2).

2. Montage suivant la revendication 1, caractérisé par le fait que les unités de raccordement peuvent être commandées par le processeur central à l'aide d'une adresse respective de fonctionnement normal et d'une adresse respective de fonctionnement d'urgence et que lors de l'entrée d'une perturbation de fonctionnement dans un module de raccordement ou dans son dispositif de commande de groupe, les adresses de fonctionnement d'urgence, mémorisées dans le processeur central dans le cas d'un fonctionnement normal de ce module de raccordement ou de ce dispositif de commande de groupe, des unités de raccordement concernées sont débloqués et, au lieu de cela, les adresses de fonctionnement normal sont bloquées.

3. Montage suivant la revendication 2, caractérisé par le fait que les unités de raccordement peuvent être commandées par le processeur central au moyen de l'adresse de fonctionnement normal par l'intermédiaire du module de raccordement associé à ces unités et, au moyen de l'adresse de fonctionnement d'urgence, par l'intermédiaire de l'autre groupe respectif de raccordement.

4. Montage suivant la revendication 1, caractérisé par le fait que les unités de raccordement peuvent être commandées par le processeur central par l'intermédiaire de canaux de transmission de signaux associés aux modules de raccordement, à l'aide d'une adresse respective, qui englobe une première partie désignant le module de raccordement respectif et une seconde partie d'adresse désignant l'unité de raccordement respective à l'intérieur de ce module de raccordement, qu'un convertisseur adresses/canaux de transmission de signaux situé dans le processeur central envoie, lors de la présence d'une information pour l'unité de raccordement, à partir de l'adresse jointe à l'information et sur la base de la première partie de cette adresse, un numéro de canal de transmission de signaux utilisé par le processeur pour commander le canal de transmission de signaux considéré, qu'après la commande de ce canal, l'adresse ainsi que l'information concernant ce canal sont retransmises et que, pendant le fonctionnement d'urgence, le processeur remplace l'adresse du module de raccordement considéré dans le convertisseur adresses/canaux de transmission de signaux, par l'adresse de l'autre module de raccordement, et inversement dans le cas de la suppression du fonctionnement d'urgence.

# FIG 1

# FIG 2